# EUROPÄISCHE PATENTSCHRIFT

(11) **EP 3 712 337 B1**
(45) Veröffentlichungstag und Bekanntmachung des Hinweises auf die Patenterteilung: **04.01.2023**
(21) Anmeldenummer: 20161713.1
(22) Anmeldetag: 09.03.2020
(51) Int. Cl.: E03C 1/04, E03B 7/07, F24D 17/00, F25D 3/00

(54) **TRINKWASSERZIRKULATIONSVORRICHTUNG**
DRINKING WATER CIRCULATING DEVICE
DISPOSITIF DE CIRCULATION D'EAU POTABLE

(30) Priorität: 08.03.2019 DE 202019001121 U
(43) Veröffentlichungstag der Anmeldung: 23.09.2020
(73) Patentinhaber: Gebr. Kemper GmbH + Co. KG Metallwerke, 57462 Olpe (DE)
(72) Erfinder: Vogt, Alexander, 57439 Attendorn (DE); Schleime, Tim, 57439 Attendorn (DE); Hössel, Hendrik, 57489 Drolshagen (DE); Theile, Tobias, 57489 Drolshagen (DE)
(74) Vertreter: Grünecker Patent- und Rechtsanwälte PartG mbB

(56) Entgegenhaltungen:
- EP-A1- 3 037 591
- WO-A1-98/36231
- DE-A1-102005 036 861
- DE-U1-202014 001 131
- DE-U1-202014 103 193
- US-A1- 2018 119 990

## Beschreibung

Die vorliegende Erfindung betrifft eine Trinkwasserzirkulationsvorrichtung mit den oberbegrifflichen Merkmalen von Anspruch 1. Eine solche Trinkwasserzirkulationsvorrichtung ist aus DE 20 2014 103 193 U1 bekannt. Eine ähnliche Trinkwasserzirkulationsvorrichtung ist aus DE 20 2014 001 131 U1 bekannt.

Aus EP 3 037 591 B1 ist ein Trinkwassersystem für kaltes Trinkwasser bekannt, welches mit einem Wärmeübertrager und einer Zirkulationspumpe versehen ist, um verschiedenen Verbrauchern in einem Gebäude kaltes Trinkwasser zuzuführen. Den Verbrauchern nachgelagert ist zumindest ein thermisches Regulierventil vorgesehen, welches abhängig von der Temperatur des an dem Verbraucher anstehenden Kaltwassers den Volumenstrom regelt, sodass jederzeit hinreichend kaltes Wasser an den Verbrauchern ansteht. In Strömungsrichtung hinter dem letzten Verbraucher nachgelagert schließt sich eine Zirkulationsleitung an, in der das thermische Regulierventil vorgesehen und die mit einer Pumpe versehen ist, die das relativ zu warme Wasser einem Wärmeübertrager zuführt. So zirkuliert kaltes Wasser regelmäßig innerhalb des Trinkwassersystems. Eine Stagnation und damit eine unzulässig hohe Erwärmung des kalten Trinkwassers wird vermieden.

Die vorliegende Erfindung will eine Trinkwasserzirkulationsvorrichtung für ein solches Wassersystem TWK angeben, die sich kompakt in einem Gebäude unterbringen lässt, universell an unterschiedliche Kühleinrichtungen einfach anschließen lässt, leicht bedient werden kann und darüber hinaus wenig störanfällig und einfach zu montieren ist.

Zur Lösung dieser Aufgabe wird mit der vorliegenden Erfindung eine Trinkwasserzirkulationsvorrichtung mit den Merkmalen von Anspruch 1 angegeben. Diese Trinkwasserzirkulationsvorrichtung kombiniert mehrere, an sich bekannte Elemente eines Trinkwasserzirkulationssystems für Kaltwasser, so einen Wärmeübertrager und eine Trinkwasserzirkulationspumpe. Der Wärmeübertrager ist vorgesehen, um das Trinkwasser zu kühlen. Er ist mit einem Rücklaufanschluss für das Einleiten von aus einer Zirkulationsleitung zurückgeführtem Trinkwasser und einem Vorlaufanschluss für die Abgabe des gekühlten Trinkwassers aus der Zirkulationsvorrichtung versehen. Zwischen diesen beiden Anschlüssen befindet sich die Trinkwasserzirkulationspumpe. Die beiden Anschlüsse bilden Schnittstellen des erfindungsgemäßen Trinkwasserzirkulationssystems für das Einleiten des zu kühlenden Trinkwassers in die Trinkwasserzirkulationsvorrichtung und Ausleiten desselben.

Des Weiteren weist die Trinkwasserzirkulationsvorrichtung der vorliegenden Erfindung einen Pufferspeicher für ein Kühlmedium auf. Die Kühlung des Kühlmediums erfolgt dabei üblicherweise separat von der Trinkwasserzirkulationsvorrichtung. So sind üblicherweise Kühlmediumvor- und - rücklaufleitungen zu dem Pufferspeicher vorgesehen, die entsprechende Kühlmediumanschlüsse aufweisen, die üblicherweise an der Außenseite der Trinkwasserzirkulationsvorrichtung freiliegen. Des Weiteren hat die Trinkwasserzirkulationsvorrichtung eine Kühlmediumpumpe, die in einem Strömungsweg zwischen dem Pufferspeicher und dem Wärmeübertrager vorgesehen ist, um das Kühlmedium innerhalb der Trinkwasserzirkulationsvorrichtung umzuwälzen.

Schließlich umfasst die erfindungsgemäße Trinkwasserzirkulationsvorrichtung zumindest einen Temperaturfühler, der dem Vorlauf des gekühlten Trinkwassers zugeordnet ist. Optional umfasst die erfindungsgemäße Trinkwasserzirkulationsvorrichtung einen Rücklauftemperaturfühler, der dem noch warmen, aus der Zirkulation zurückgeführten Trinkwasser zugeordnet ist. Weiter optional umfasst die erfindungsgemäße Trinkwasserzirkulationsvorrichtung einen Kühlmedium-Temperaturfühler, der die Temperatur des Kühlmediums misst und vorzugweise als Einsteckfühler mit Tauchhülse die Temperatur des Kühlmediums in dem Pufferspeicher ermittelt, um hieraus eine Kühlanforderung zu formulieren, die dazu führt, dass von der externen Kühlmediumzufuhr gekühlt aufbereitetes Kühlmedium zugeleitet wird.

Die vorerwähnten Temperaturfühler sind datenmäßig mit einer Steuervorrichtung gekoppelt, die zusammen mit den Temperaturfühlern als Teil der erfindungsgemäßen, zu einer baulichen Einheit gebildeten Zirkulationsvorrichtung vorgesehen sind. Je nach Anzahl der verwendeten Temperaturfühler können verschiedene Regelungskonzepte verfolgt werden. So wird der wenigstens eine Temperaturfühler zur Erfassung der Trinkwasservorlauftemperatur von der Steuervorrichtung ausgewertet und zur Regelung der Kühlmediumpumpe genutzt. In dieser Variante wird die Trinkwasserzirkulationspumpe zwar an das Trinkwassersystem angepasst aber mit konstanter Leistung betrieben. In der optionalen ersten Variante wird ein zweiter Temperaturfühler zur Messung der Trinkwasserrücklauftemperatur von der Steuerung ausgewertet und zur Ansteuerung der Trinkwasserzirkulationspumpe genutzt. Der optionale dritte Temperaturfühler wird zur Nachladung des Pufferspeichers genutzt.

Aufgrund dieser Ausgestaltung kann die erfindungsgemäße Trinkwasserzirkulationsvorrichtung als einheitliches Bauteil vorgefertigt werden, was die Möglichkeit von Montagefehlern vermindert. Die Trinkwasserzirkulationsvorrichtung der vorliegenden Erfindung ist kompaktbauend. Üblicherweise bildet der Pufferspeicher eine Standfläche aus, der die übrigen technischen Komponenten der erfindungsgemäßen Trinkwasserzirkulationsvorrichtung trägt. So sind die technischen Komponenten der erfindungsgemäßen Trinkwasserzirkulationsvorrichtung, nämlich zumindest der Wärmeübertrager, Leitungen des Trinkwasserweges innerhalb der Zirkulationsvorrichtung, die Trinkwasserzirkulationspumpe, die Kühlmediumpumpe und die Steuervorrichtung über dem Pufferspeicher angeordnet. Dies bietet den Vorteil, dass sämtliche technische Komponenten von oben leicht zugänglich sind. Auch kann die Steuervorrichtung bzw. ein ihr zugeordnetes Bedienteil von oben und damit ergonomisch günstig bedient werden. Die entsprechende Ausgestaltung bietet den weiteren Vorteil einer kompakten Ausgestaltung und eines optimalen Schwerpunkts der erfindungsgemäßen Trinkwasserzirkulationsvorrichtung. So kann diese leicht montiert und gehandhabt werden. Darüber hinaus lässt sich jedenfalls bei einer Ausgestaltung, bei welcher der Pufferspeicher ein relativ kleines Speichervolumen hat, ein nur gering in der Höhe aufbauender Aufbau erreichen. Der Pufferspeicher hat hierzu ein Speichervolumen (Nennvolumen) von 100 I +/- 30 I. Die Höhe der Trinkwasserzirkulationsvorrichtung kann selbst bei einem Anordnen aller technischer Komponenten über dem Pufferspeicher auf etwa 80 cm +/- 10 cm begrenzt werden. Da sich die Steuervorrichtung auf dieser Höhe befindet, kann sie leicht und ergonomisch bedient werden.

Die Steuervorrichtung hat vorzugsweise ein Bedienteil, das senkrecht nach oben ausgerichtet ist, sodass die Bedienoberfläche in der Horizontalen liegt und von oben erreicht werden kann, was die Ergonomie weiter verbessert.

Bei der erfindungsgemäßen Trinkwasserzirkulationsvorrichtung wird bevorzugt ein Wasser/Glykol-Gemisch als Kühlmedium verwendet. So muss ein die Zirkulationsvorrichtung in Betrieb nehmender Installateur keine besondere Qualifikation zur Handhabung von gesundheitsgefährdenden oder die Umgebung beeinträchtigenden Kühlmedien (Kältemittelschein) aufweisen. Darüber hinaus wird Glykol in der Flüssigkeitsklasse 3 geführt, sodass der Wärmeübertrager lediglich einwandig das zu kühlende Trinkwasser von dem Kühlmedium trennen muss. Dadurch reduzieren sich die Baugröße und die Kosten für die Herstellung des Wärmeübertragers. Weiterhin wird dadurch die Wärmeübertragung zwischen den beiden Medien innerhalb des Wärmeübertragers verbessert.

Der Vorschlag eines Pufferspeichers bietet den weiteren Vorteil, dass Kühlmedium nicht permanent zirkuliert und aufbereitet werden muss. Vielmehr wird Kühlmedium von einer externen Kühlmediumaufbereitung erst aufgrund eines Signals der Steuervorrichtung und auf Anforderung zugeführt. Die erfindungsgemäße Trinkwasserzirkulationsvorrichtung kann dementsprechend über eine gewisse Zeit autonom und ohne die Zufuhr von aufbereitetem Kühlmedium betrieben werden. Dadurch lassen sich die Energiekosten für den Betrieb der Trinkwasserzirkulationsvorrichtung senken. Auch die Kühlmediumaufbereitung muss nicht im Dauerbetrieb laufen, sodass Wartungsaufwand für die Kühlmediumaufbereitung gespart werden kann. Weiterhin sorgt das erfindungsgemäße Volumen des Pufferspeichers dafür, dass eine ggf. nur für die Trinkwasserzirkulationsvorrichtung vorhandene Kühlmediumaufbereitung seltener ein- und ausgeschaltet werden muss, was die Effizienz und Lebensdauer weiter verbessert. Auch kann durch die Verwendung des Pufferspeichers die Art der Kühlmediumaufbereitung frei gewählt werden, da eine exakte Abstimmung der Wärmeleistungen zwischen der Kühlmediumaufbereitung und der Trinkwasserzirkulationsvorrichtung nicht erforderlich ist.

Den Nachteil eines verhältnismäßig geringen Pufferspeichervolumens wird gemäß einer bevorzugten Weiterbildung der vorliegenden Erfindung durch zumindest ein sich horizontal erstreckendes Lochblech kompensiert, welches in den Pufferspeicher im Bereich eines Kühlmediumeinlasses eingebaut. Der Kühlmediumeinlass ist dabei derjenige Beströmungsweg innerhalb des Pufferspeichers, durch den das Kühlmedium nach Passieren des Wärmeübertragers zurück in den Pufferspeicher geleitet wird. Aufgrund dieses Lochblechs kann das Medium nicht ungehindert von oben in einen tieferen Bereich des Pufferspeichers gelangen. Vielmehr mischt und verteilt sich dieses verhältnismäßig warme Kühlmedium im oberen Bereich des Pufferspeichers und sinkt erst durch Abkühlung aufgrund der sich dabei erhöhenden Dichte ab. So bleibt trotz eines kleinen Speichervolumens und relativ hoher Volumenströme eine gute Temperaturschichtung innerhalb des Pufferspeichers erhalten, bei welcher das verhältnismäßig relativ kalte Kühlmedium sich auf dem Boden des Pufferspeichers befindet, wohingegen das verhältnismäßig warme Kühlmedium im oberen Bereich des Pufferspeichers befindlich ist. Dieser Effekt kann durch mehrere, waagerecht eingebaute Lochbleche im Bereich des Kühlmediumeinlasses weiter verbessert werden. Dabei sollten die Löcher der Lochbleche versetzt zueinander vorgesehen sein.

Es versteht sich, dass aufgrund der Temperaturschichtung durch die Kühlmediumpumpe Kühlmedium vom Boden des Pufferspeichers angesaugt wird. Dort befindet sich eine Ansaugöffnung eines in dem Pufferspeicher verlegten Ansaugstutzens, der zu der Kühlmediumeinlassseite des Wärmeübertragers führt.

Mit Blick auf die gewünschte kompakte Ausgestaltung der erfindungsgemäßen Trinkwasserzirkulationsvorrichtung wird gemäß einer bevorzugten Weiterbildung der vorliegenden Erfindung vorgeschlagen, als Wärmeübertrager einen Plattenwärmeübertrager vorzusehen, der in schräger Ausrichtung relativ zu dem Schwerefeld der Erde und über der Oberfläche des Pufferspeichers montiert ist. Die schräge Ausrichtung vermindert die Einbauhöhe der Es versteht sich, dass Rohrleitungen, die aus der Wärmedämmung nach außen herausgeführt sind, mit einem Quellband oder einer anderen Art von Dichtung gegenüber der Wärmedämmung abgedichtet sind.

Zum weitest gehenden Ausschluss von Luft innerhalb des durch die Wärmedämmung umschlossenen Raumes ist diese Wärmedämmung die medienführenden Komponenten der Trinkwasserzirkulationsvorrichtung konturfolgend ausgebildet. So umgibt die Wärmedämmung mit wenig Spiel diese technischen Komponenten. Auf diese Weise wird Feuchtigkeit, die bei der Montage der erfindungsgemäßen Vorrichtung in dem geschäumten Raum eingeschlossen werden kann, erheblich reduziert. Die verbleibende Feuchtigkeitsmenge wird durch geeignete Maßnahmen, wie beispielsweise einen Silikatbeutel gebunden, sodass keine freie Feuchtigkeitsmenge verbleibt, die an den kälteren Komponenten der erfindungsgemäßen Trinkwasserzirkulationsvorrichtung beim Betrieb derselben kondensieren kann.

Gemäß einer bevorzugten Weiterbildung der vorliegenden Erfindung ist das Bedienteil in einem Deckel der Wärmedämmung vorgesehen. Der Deckel kann durch Lösen der Steckverbindung von dem übrigen Teil der Wärmedämmung um die technischen Komponenten gelöst werden. Nach Abheben des Deckels sind sämtliche Schnittstellen an Rohre der erfindungsgemäßen Trinkwasserzirkulationsvorrichtung zu den Pumpen und dem Wärmeübertrager von oben zugänglich. Der Deckel hat auf der Oberfläche ausgesparte Kanäle, in denen elektrische Leitungen zu der Trinkwasserzirkulationsvorrichtung verlegt sind, wobei der Deckel bevorzugt eine Aufnahme ausbildet, die einen Stecker in sich aufnimmt, über den der Leitungsweg der elektrischen Leitungen getrennt werden kann. Dieser Stecker wird vor dem Abheben des Deckels gelöst. Die Aufnahme des Steckers in den Deckel ist dabei derart, dass die Steckverbindung notwendig vor dem Abheben des Deckels gelöst werden muss, um für Montage- und Wartungszwecke die Zirkulationsvorrichtung zunächst freizuschalten. Das Abheben des Deckels bedingt dementsprechend eine Stromlosschaltung der erfindungsgemäßen Trinkwasserzirkulationsvorrichtung.

Die von der Vorrichtung wegführenden elektrischen Leitungen sind über ein Steckelement und ein Gegensteckelement mit den zu der Vorrichtung führenden Leitungen steckbar verbunden, sodass beim Abheben des Deckels zunächst diese Steckverbindung gelöst werden muss und dann die Verkabelung in der Trinkwasserzirkulationsvorrichtung sauber verlegt bleibt. Lediglich das die Steckverbindung mit der Steuervorrichtung verbindende Kabelstück verbleibt an der Steuervorrichtung.

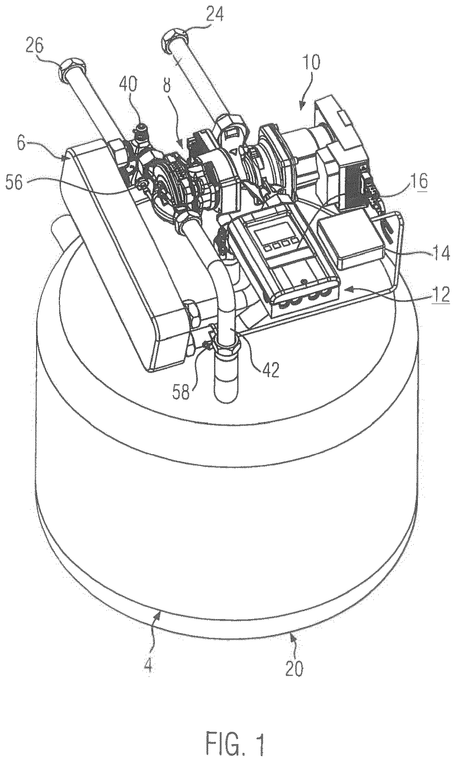

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- .Figur 1: eine perspektivische Seitensicht der technischen Komponenten des Ausführungsbeispiels;
- Figur 2: eine perspektivische Draufsicht des Ausführungsbeispiels mit vollständiger Wärmedämmung und
- Figur 3: eine Ansicht ähnlich zu Figur 2 bei abgenommenem Deckel.

Die Figur 1 zeigt eine Trinkwasserzirkulationsvorrichtung ohne Wärmedämmung und ohne äußeres Gehäuse, welches eine optische Verkleidung ausbildet. Die technischen Komponenten der Trinkwasserzirkulationsvorrichtung 2 sind ein Pufferspeicher 4, ein den Wärmeübertrager ausbildender Plattenwärmeübertrager 6, eine Kühlmediumpumpe 8, eine Trinkwasserzirkulationspumpe 10 sowie eine Steuervorrichtung 12, die auch einen Datenlogger 14 umfasst. Die Steuervorrichtung 12 umfasst ein Bedienteil 16, das außen an der Trinkwasserzirkulationsvorrichtung freiliegt.

Der Pufferspeicher 4 ist zylindrisch ausgeformt und hat einen Boden 20 der angegebenen Standfläche ausgebildet, auf dem die technischen Komponenten stehen. Die oberhalb des Pufferspeichers vorgesehenen technischen Komponenten liegen innerhalb der durch den Pufferspeicher 4 gebildeten Grundfläche. Die Steuervorrichtung 12 wird unterseitig gegenüber dem Pufferspeicher 4 über eine nicht gezeigte Wärmedämmungskomponente gedämmt.

An einem Umfangsabschnitt des Pufferspeichers 4 ragen Vor- und Rücklaufanschlüsse radial in Bezug auf den Pufferspeicher 4 ab, von denen lediglich ein Kühlmediumanschluss 22 zu sehen ist und über welche das Kühlmedium an den Pufferspeicher 4 abgegeben und zu warmes Kühlmedium von dem Pufferspeicher 4 abgeführt wird. An dem gleichen Umfangsabschnitt sind ein Vorlaufanschluss 26 und ein Rücklaufanschluss 24 für das in der Vorrichtung 2 zu kühlende Trinkwasser vorgesehen. An diesen Stellen ist die ansonsten vollumfänglich um den Pufferspeicher 4 vorgesehene Dämmung ausgespart, sodass entsprechende Zuleitungsrohre durch die Dämmung hindurchgeführt werden können.

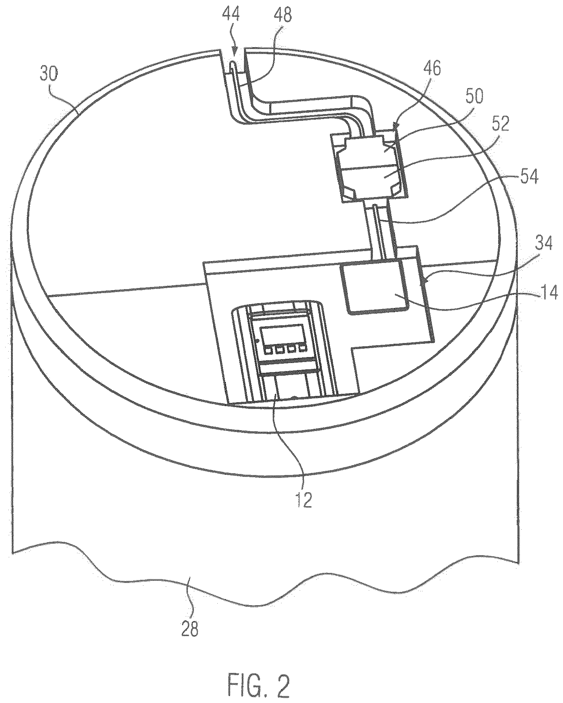

Figur 2 verdeutlicht die Wärmedämmung, die aus drei Wärmedämmungskomponenten besteht, nämlich einer den Pufferspeicher 4 nahezu vollständig umgebenden Umschäumung des Pufferspeichers 4, die mit Bezugszeichen 28 gekennzeichnet ist, einem Deckel 30 und einer erfindungsgemäßen Vorrichtung. Da der Plattenwärmeübertrager leicht gegenüber der waagerechten herausgedreht, d.h. angeschrägt ausgerichtet ist, lässt sich dieser durch Spülen entlüften. Luft wird dementsprechend aus dem Wärmeübertrager durch das fließende Medium herausgeleitet. Gleichwohl wird aufgrund der schrägen Ausrichtung im Schwerefeld der Erde der Temperaturunterschied des Mediums und damit der Dichtunterschied des Kühlmediums für die Schichtströmung innerhalb des Wärmeübertragers genutzt.

Auf der Seite des Kühlmediums kann der Wärmeübertrager an seiner obersten Stelle ein Entlüftungsventil aufweisen. Die entsprechende Seite des Wärmeübertragers hat ihre Anschlüsse oben, sodass auch die Entlüftung des Wärmeübertragers an dieser Stelle für die Kühlmediumseite gewährleistet ist. Da beim Betrieb keine Luft in die Kühlmediumzirkulation eingebracht werden kann, muss diese nur bei Inbetriebnahme bzw. im Anschluss an eine Wartung der erfindungsgemäßen Vorrichtung entlüftet werden. So kann die Inbetriebnahme erfolgen, ohne dass die diffusionsdichte Wärmedämmung ganz oder teilweise entfernt werden muss.

Die technischen Komponenten der erfindungsgemäßen Trinkwasserzirkulationsvorrichtung sind üblicherweise von einer Wärmedämmung umgeben. Lediglich das Bedienteil kann außenseitig innerhalb der Wärmedämmung freiliegen und somit zugänglich sein, ohne dass die Wärmedämmung abgenommen werden muss. Die Wärmedämmung besteht bevorzugt aus Wärmedämmungskomponenten, die über Steckverbindungen miteinander verbunden sind. So wird ein Verkleben der Wärmedämmungskomponenten sowohl bei der Montage als auch bei der Wartung überflüssig. Die Steckverbindung ist einfach von jedem Dritten herzustellen, sodass eine gute Dämmung bzw. Diffusionsdichtigkeit dauerhaft gewährleistet ist.

Die Dämmung umfasst üblicherweise eine Schäumung des Pufferspeichers. Diese Schäumung des Pufferspeichers umgibt den Speicher üblicherweise vollumfänglich. Die Schäumung umgibt auch üblicherweise den Boden, sodass regelmäßig der Pufferspeicher auf der Schäumung aufsteht. Auf diese Schäumung ist ein Deckel der Wärmedämmung aufgesteckt, der bevorzugt das Bedienteil der Steuervorrichtung in sich aufnehmen kann. Zwischen der Steuervorrichtung und dem Pufferspeicher befindet sich üblicherweise eine zusätzliche Dämmung, die Freiräume zwischen der Steuervorrichtung und dem Pufferspeicher ausfüllt und die Steuervorrichtung thermisch dämmt. Die Steuervorrichtung kann dabei mehrere für sich separat vorgesehene Komponenten umfassen, so beispielsweise ein separates Steuergehäuse und einen Datenlogger in einem anderen Gehäuse.

Es versteht sich, dass Rohrleitungen aus der Wärmedämmung nach außen herausgeführt werden. Die drei Wärmedämmungskomponenten 28 bis 32 bestehen jeweils aus einem geschäumten Kunststoff.

In dem Deckel 30 ist ein Fenster 34 ausgespart, in dem ein Teil der Steuerelementdämmung 32 sowie die Oberseite der Steuervorrichtung 12 und der Datenlogger 14 freiliegen. So können diese elektronischen Bauteile des Ausführungsbeispiels jederzeit erreicht bzw. bedient werden.

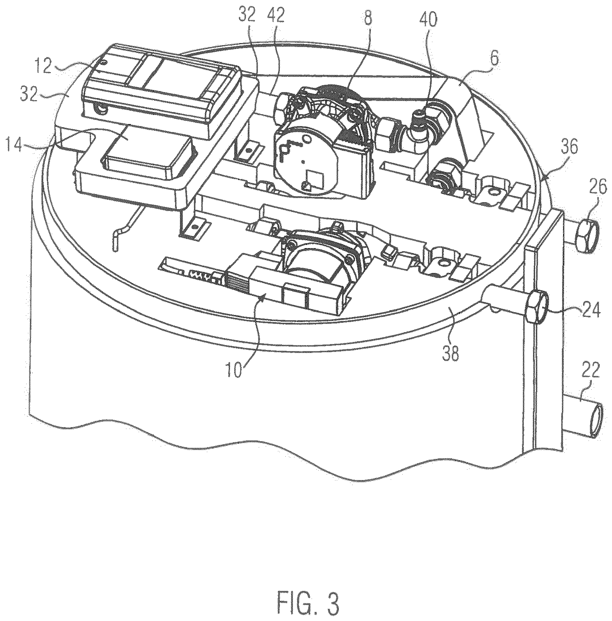

Wie Figur 3 verdeutlicht, sitzt der Deckel mit seinem umfänglichen Rand auf einem Kragen 36 auf, der durch die Umschäumung 28 gebildet und mit einem Dichtband 38 umfänglich umgeben ist, welches mit dem Kranz des auf die Umschäumung 28 aufgesteckten Deckels 30 eine dichtende Anlage bewirkt.

Figur 3 verdeutlicht ferner, dass die technischen Komponenten des Ausführungsbeispiels von dem Dichtmaterial der Umschäumung 28 konturfolgend umgeben sind, sodass nur geringe Freiräume innerhalb der Abdichtung verbleiben. Über metallische Winkel ist die Steuerelementdämmung 32 gegenüber den technischen Komponenten der Fluidkreisläuft des Ausführungsbeispiels getrennt und beabstandet, wodurch die thermische Isolation der Steuervorrichtung 12 bzw. des Datenloggers 14 verbessert ist. Bezugszeichen 40 kennzeichnet ein obenliegendes Entlüftungsventil zu einer mit Bezugszeichen 42 gekennzeichneten Verrohrung des Kühlmediumkreislaufs.

Die Figur 3 verdeutlicht ferner, dass die Vorlauf- und Rücklaufanschlüsse 26, 24 für das Trinkwasser die Dämmung in Form der Umschäumung 28 umfänglich überragen und somit Anschlussstellen für das zu kühlende Trinkwasser bereitstellen. Entsprechendes gilt für die Kühlmittelanschlüsse, von denen auch in Figur 3 lediglich ein Anschluss 22 gezeigt ist.

Die Figur 2 verdeutlicht auch den elektrischen Anschluss des Ausführungsbeispiels. Dazu bildet der Deckel 30 einen Kabelkanal 44 aus, der in einer Steckeraufnahme 46 mündet, in dem ein zugeführter Kabelstrang 48, der in einem Steckelement 50 endet, mit einem Gegenstecker 52 eines zu der Steuervorrichtung 12/14 führenden Kabelstrangs 54 verbunden ist. Zum Abheben des Deckels 30 muss die Steckverbindung zwischen den beiden Steckelementen 50, 52 gelöst werden. Dadurch ergibt sich zwangsläufig eine Freischaltung des Ausführungsbeispiels zu Montagezwecken.

Aus Figur 1 sind die Positionen eines Temperaturfühlers 56 für den Trinkwasser Vorlauf und eines Temperaturfühler 58 für den Trinkwasser Rücklauf zu entnehmen.

### Bezugszeichenliste

- 2: Trinkwasserzirkulationsvorrichtung
- 4: Pufferspeicher
- 6: Plattenwärmeübertrager
- 8: Kühlmediumpumpe
- 10: Trinkwasserzirkulationspumpe
- 12: Steuervorrichtung
- 14: Datenlogger
- 16: Bedienteil
- 20: Boden/Standfläche
- 22: Kühlmediumanschluss
- 24: Rücklaufanschluss Trinkwasser kalt
- 26: Vorlaufanschluss Trinkwasser kalt
- 28: Umschäumung
- 30: Deckel
- 32: Steuerelementdämmung
- 34: Fenster
- 36: Kragen
- 38: Dichtband
- 40: Entlüftungsventil
- 42: Verrohrung Kühlmittelkreislauf
- 44: Kabelkanal
- 46: Steckeraufnahme
- 48: zugeführter Kabelstrang
- 50: Steckelement
- 52: Gegensteckelement
- 54: Kabelstrang
- 56: Temperaturfühler Trinkwasser Vorlauf
- 58: Temperaturfühler Trinkwasser Rücklauf

## Patentansprüche

1. Trinkwasserzirkulationsvorrichtung (2) mit einem Wärmeübertrager zur Kühlung des Trinkwassers, einem Rücklaufanschluss (24) für das Einleiten von aus einer Zirkulationsleitung zurückgeführtem Trinkwasser in die Trinkwasserzirkulationsvorrichtung (2), einem Vorlaufanschluss (26) für die Abgabe des gekühlten Trinkwasser aus der Trinkwasserzirkulationsvorrichtung (2), einer zwischen dem Rücklaufanschluss (24) und dem Vorlaufanschluss (26) vorgesehenen Trinkwasserzirkulationspumpe (10), einer Kühlmediumpumpe (8), einer Steuervorrichtung (12) zur Steuerung der Kühlmediumpumpe (8) und einem dem Vorlauf zugeordneten Vorlauftemperaturfühler (56), der datenmäßig mit der Steuervorrichtung (12) gekoppelt ist, **gekennzeichnet durch**
einen Pufferspeicher (4) für ein Kühlmedium (22), der durch einen Kühlmedium-Strömungsweg, in welchem die Kühlmediumpumpe (8) vorgesehen ist, fluidisch mit dem Wärmeübertrager (6) verbunden ist.

2. Trinkwasserzirkulationsvorrichtung (2) nach Anspruch 1 mit einem dem Trinkwasserrücklauf zugeordneten Temperaturfühler (58), **dadurch gekennzeichnet, dass** der Temperaturfühler (58) datenmäßig mit der Steuervorrichtung (12) gekoppelt ist und die Steuervorrichtung die Zirkulationspumpe (10) ansteuert.

3. Trinkwasserzirkulationsvorrichtung (2) nach Anspruch 1 oder 2, **gekennzeichnet durch** einen dem Puffspeicher (4) zugeordneten Kühlmediumtemperaturfühler, der datenmäßig mit der Steuervorrichtung (12) gekoppelt ist.

4. Trinkwasserzirkulationsvorrichtung (2) nach einem der vorherigen Ansprüche, **dadurch gekennzeichnet, dass** der Pufferspeicher (4) eine ebene Standfläche (20) ausbildet und dass der Wärmeübertrager, die Leitungen des Trinkwasserweges innerhalb der Trinkwasserzirkulationsvorrichtung (2), die Trinkwasserzirkulationspumpe (10), die Kühlmediumpumpe (8) und die Steuervorrichtung (12) bei horizontaler Ausrichtung der ebenen Standfläche über dem Pufferspeicher (4) angeordnet sind.

5. Trinkwasserzirkulationsvorrichtung (2) nach einem der vorherigen Ansprüche, **gekennzeichnet durch** zumindest ein im Bereich eines Kühlmediumeinlasses in den Pufferspeicher (4) eingebautes, sich horizontal erschreckendes Lochblech.

6. Trinkwasserzirkulationsvorrichtung (2) nach einem der vorherigen Ansprüche, **dadurch gekennzeichnet, dass** der Wärmeübertrager ein Plattenwärmeübertrager ist, der in schräger Ausrichtung relativ zum Schwerefeld der Erde über der Oberfläche des Pufferspeichers (4) montiert ist.

7. Trinkwasserzirkulationsvorrichtung (2) nach einem der vorherigen Ansprüche, **gekennzeichnet durch** eine zumindest den Pufferspeicher (4) umgebende Wärmedämmung, die durch unter Zwischenlage eines Dichtungselementes (38) steckverbundene Wärmedämmungskomponenten (28; 30) gebildet ist.

8. Trinkwasserzirkulationsvorrichtung (2) nach einem der vorherigen Ansprüche, **dadurch gekennzeichnet, dass** die Wärmedämmung die medienführenden Komponenten der Trinkwasserzirkulationsvorrichtung (2) konturfolgend umgibt.

9. Trinkwasserzirkulationsvorrichtung (2) nach einem der vorherigen Ansprüche, **dadurch gekennzeichnet, dass** ein Bedienteil (16) der Steuervorrichtung (12) in einem Deckel einer zumindest den Pufferspeicher (4) umgebenden Wärmedämmung freiliegt

10. Trinkwasserzirkulationsvorrichtung (2) nach einem der vorherigen Ansprüche, **dadurch gekennzeichnet, dass** die Wärmedämmung eine den Pufferspeicher (4) außenumfänglich dämmende Umschäumung (28) aufweist, an deren Außenseite der Vorlauf- und der Rücklaufanschluss (26, 24) freiliegen und die von Kühlmediumvor- und -rücklaufleitungen (22) zu dem Pufferspeicher (4) durchsetzt ist.

11. Trinkwasserzirkulationsvorrichtung (2) nach einem der vorherigen Ansprüche, **dadurch gekennzeichnet, dass** der Pufferspeicher (4) ein Wasser/Glykol-Gemisch enthält.

12. Trinkwasserzirkulationsvorrichtung (2) nach einem der vorherigen Ansprüche, **dadurch gekennzeichnet, dass** der Pufferspeicher (4) ein Speichervolumen von 100 I +/-30 I hat.

## Claims

1. A drinking water circulation device (2) comprising a heat exchanger for cooling the drinking water, a return connection (24) for feeding drinking water returned from a circulation pipe into the drinking water circulation device (2), a supply connection (26) for discharging the cooled drinking water from the drinking water circulation device (2), a drinking water circulation pump (10) provided between the return connection (24) and the supply connection (26), a cooling medium pump (8), a control device (12) for controlling the cooling medium pump (8) and a supply temperature sensor (56), which is associated with the supply and is data-connected to the control device (12), **characterized by**
a buffer tank (4) for a cooling medium (22), which is fluidically connected to the heat exchanger (6) by a cooling medium flow path in which the cooling medium pump (8) is provided

2. The drinking water circulation device (2) according to claim 1, comprising a temperature sensor (58) associated with the drinking water return, **characterized in that** the temperature sensor (58) is data-connected to the control device (12) and controls the circulation pump (10).

3. The drinking water circulation device (2) according to claim 1 or 2, **characterized by** a cooling medium temperature sensor (60), which is associated with the buffer tank (4) and is data-connected to the control device (12).

4. The drinking water circulation device (2) according to any of the preceding claims, **characterized in that** the buffer tank (4) defines a flat support area (20) and that the heat exchanger, the pipes of the drinking water path within the drinking water circulation device (2), the drinking water circulation pump (10), the cooling medium pump (8) and the control device (12) are arranged above the buffer tank (4) when the flat support area is horizontally oriented.

5. The drinking water circulation device (2) according to any of the preceding claims, **characterized by** at least one horizontally extending perforated plate installed in the buffer tank (4) in the area of a cooling medium inlet.

6. The drinking water circulation device (2) according to any of the preceding claims, **characterized in that** the heat exchanger is a plate heat exchanger mounted, in oblique orientation relative to the gravitational field of the earth, above the surface of the buffer tank (4).

7. The drinking water circulation device (2) according to any of the preceding claims, **characterized by** a thermal insulation surrounding at least the buffer tank (4) and formed by thermal insulation components (28; 30), which are plug-connected to one another with an intermediate sealing element (38) therebetween.

8. The drinking water circulation device (2) according to any of the preceding claims, **characterized in that** a thermal insulation surrounds media-carrying components of the drinking water circulation device (2) in a contour-following manner.

9. The drinking water circulation device (2) according to any of the preceding claims, **characterized in that** an operating unit (16) of the control device (12) is exposed in a cover of a thermal insulation surrounding at least the buffer tank (4).

10. The drinking water circulation device (2) according to any of the preceding claims, **characterized in that** a thermal insulation comprises a circumferentially extending foamed component (28), which insulates the buffer tank (4) on the outer circumference thereof and on the outer side of which the supply and return connections (26, 24) are exposed, cooling medium supply and return pipes (22), which lead to the buffer tank (4), extending through the foamed component (28).

11. The drinking water circulation device (2) according to any of the preceding claims, **characterized in that** the buffer tank (4) contains a water/glycol mixture.

12. The drinking water circulation device (2) according to any of the preceding claims, **characterized in that** the buffer tank (4) has a storage capacity of 100 I +/- 30 I.

## Revendications

1. Dispositif de circulation d'eau potable (2) comprenant un échangeur de chaleur pour refroidir l'eau potable, un raccord de retour (24) pour introduire de l'eau potable recyclée à partir d'une conduite de circulation dans le dispositif de circulation d'eau potable (2), un raccord de sortie (26) pour distribuer l'eau potable refroidie à partir du dispositif de circulation d'eau potable (2), une pompe de circulation d'eau potable (10) prévue entre le raccord de retour (24) et le raccord de sortie (26), une pompe de liquide de refroidissement (8), un dispositif de commande (12) pour commander la pompe de liquide de refroidissement (8) et un capteur de température de départ (56) associé à la sortie, qui est couplé en termes de données au dispositif de commande (12), **caractérisé par**
un réservoir tampon (4) pour un liquide de refroidissement (22) qui est relié de manière fluidique à l'échangeur de chaleur (6) par un trajet d'écoulement de liquide de refroidissement dans lequel est prévue la pompe de liquide de refroidissement (8).

2. Dispositif de circulation d'eau potable (2) selon la revendication 1, comprenant un capteur de température (58) associé au retour d'eau potable, **caractérisé en ce que** le capteur de température (58) est couplé en termes de données au dispositif de commande (12) et le dispositif de commande commande la pompe de circulation (10).

3. Dispositif de circulation d'eau potable (2) selon la revendication 1 ou 2, **caractérisé par** un capteur de température de liquide de refroidissement associé au réservoir tampon (4), qui est couplé en termes de données au dispositif de commande (12).

4. Dispositif de circulation d'eau potable (2) selon l'une quelconque des revendications précédentes, **caractérisé en ce que** le réservoir tampon (4) forme une surface de support plane (20) et **en ce que** l'échangeur de chaleur, les conduites du trajet d'eau potable à l'intérieur du dispositif de circulation d'eau potable (2), la pompe de circulation d'eau potable (10), la pompe de liquide de refroidissement (8) et le dispositif de commande (12) sont agencés au-dessus du réservoir tampon (4) lorsque la surface de support plane est orientée horizontalement.

5. Dispositif de circulation d'eau potable (2) selon l'une quelconque des revendications précédentes, **caractérisé par** au moins une tôle perforée s'étendant horizontalement dans la zone d'une entrée de liquide de refroidissement dans le réservoir tampon (4).

6. Dispositif de circulation d'eau potable (2) selon l'une quelconque des revendications précédentes, **caractérisé en ce que** l'échangeur de chaleur est un échangeur de chaleur à plaques qui est monté dans une orientation oblique par rapport au champ de gravité de la terre au-dessus de la surface du réservoir tampon (4).

7. Dispositif de circulation d'eau potable (2) selon l'une quelconque des revendications précédentes, **caractérisé par** une isolation thermique entourant au moins le réservoir tampon (4), qui est formée par des composants d'isolation thermique (28 ; 30) reliés par enfichage avec interposition d'un élément d'étanchéité (38).

8. Dispositif de circulation d'eau potable (2) selon l'une quelconque des revendications précédentes, **caractérisé en ce que** l'isolation thermique entoure en suivant le contour les composants du dispositif de circulation d'eau potable (2) qui transportent le liquide.

9. Dispositif de circulation d'eau potable (2) selon l'une quelconque des revendications précédentes, **caractérisé en ce qu'**une partie de commande (16) du dispositif de commande (12) est exposée dans un couvercle d'une isolation thermique entourant au moins le réservoir tampon (4).

10. Dispositif de circulation d'eau potable (2) selon l'une quelconque des revendications précédentes, **caractérisé en ce que** l'isolation thermique présente un entourage en mousse (28) isolant le réservoir tampon (4) au niveau de la circonférence extérieure, au niveau du côté extérieur duquel les raccords de sortie et de retour (26, 24) sont exposés et qui est traversé par des conduites de sortie et de retour de liquide de refroidissement (22) par rapport au réservoir tampon (4).

11. Dispositif de circulation d'eau potable (2) selon l'une quelconque des revendications précédentes, **caractérisé en ce que** le réservoir tampon (4) contient un mélange eau/glycol.

12. Dispositif de circulation d'eau potable (2) selon l'une quelconque des revendications précédentes, **caractérisé en ce que** le réservoir tampon (4) a un volume de stockage de 100 I +/- 30 I.
